# FASCICULE DE BREVET EUROPEEN

(11) **EP 2 718 123 B1**
(45) Date de publication et mention de la délivrance du brevet: **21.09.2016**
(21) Numéro de dépôt: 12729065.8
(22) Date de dépôt: 06.06.2012
(51) Int. Cl.: B60C 15/00, B60C 15/06

(54) **BOURRELET DE PNEUMATIQUE POUR VEHICULE LOURD DE TYPE GENIE CIVIL**
REIFENWULST FÜR SCHWERLASTFAHRZEUG BAUMASCHINENART
TIRE BEAD FOR HEAVY DUTY CONSTRUCTION VEHICLE

(30) Priorité: 07.06.2011 FR 1154933
(43) Date de publication de la demande: 16.04.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: FERLIN, Olivier, F-63040 Clermont-Ferrand Cedex 9 (FR); HARLE, François, F-63040 Clermont-Ferrand Cedex 9 (FR)
(74) Mandataire: Millanvois, Patrick Jacques Jean
(86) Numéro de dépôt international: PCT/EP2012/060652
(87) Numéro de publication internationale: WO 2012/168274

(56) Documents cités:
- EP-A1- 1 985 469
- EP-A2- 0 958 946
- US-A1- 2003 089 440
- US-A1- 2004 007 305
- US-A1- 2007 113 944

## Description

La présente invention concerne un pneumatique radial destiné à équiper un véhicule lourd de type génie civil.

Bien que non limitée à ce type d'application, l'invention sera plus particulièrement décrite en référence à un pneumatique radial de grande dimension, destiné, par exemple, à être monté sur un dumper, véhicule de transport de matériaux extraits de carrières ou de mines de surface. Le diamètre nominal de la jante d'un tel pneumatique, au sens de la norme European Tyre and Rim Technical Organisation ou ETRTO, est au moins égal à 25 pouces.

Un pneumatique comprend deux bourrelets, assurant la liaison mécanique entre le pneumatique et la jante sur laquelle il est monté, les bourrelets étant réunis respectivement par l'intermédiaire de deux flancs à une bande de roulement, destinée à venir en contact avec le sol par l'intermédiaire d'une surface de roulement.

Dans ce qui suit, les directions circonférentielle, axiale et radiale désignent respectivement une direction tangente à la surface de roulement selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique radial pour véhicule lourd de type génie civil comprend habituellement au moins une couche d'armature de carcasse constituée d'éléments de renforcement généralement métalliques enrobés d'un matériau polymérique d'enrobage. La couche d'armature de carcasse comprend une partie principale, reliant les deux bourrelets entre eux et s'enroulant, dans chaque bourrelet, de l'intérieur vers l'extérieur du pneumatique autour d'une tringle pour former un retournement. Les éléments de renforcement métalliques sont sensiblement parallèles entre eux et font, avec la direction circonférentielle, un angle compris entre 85° et 95°, pour la partie principale, et un angle compris entre 75° et 105°, pour le retournement.

La tringle comprend un élément de renforcement circonférentiel le plus souvent métallique entouré d'au moins un matériau, de manière non exhaustive, polymérique ou textile. La portion de tringle en contact avec l'armature de carcasse contribue en particulier à la reprise des efforts de tension dans l'armature de carcasse au gonflage, par couplage avec l'armature de carcasse. Cette contribution à la reprise d'efforts de tension dépend de la rigidité de torsion de la tringle et de la géométrie du retournement. Dans le cas usuel d'une forte rigidité de torsion de la tringle, les efforts de tension au gonflage sont essentiellement repris par la tringle, avec une contribution secondaire du retournement.

Le retournement, dans chaque bourrelet, permet l'ancrage de la couche d'armature de carcasse à la tringle du bourrelet. Dans le cas d'un pneumatique pour véhicule lourd de type génie civil, le retournement est généralement long, c'est-à-dire que son extrémité libre est radialement plus proche du point le plus axialement extérieur de l'armature de carcasse, au niveau du flanc du pneumatique, que du point radialement le plus extérieur de la tringle.

Chaque bourrelet comprend également un élément de remplissage prolongeant radialement vers l'extérieur la tringle. L'élément de remplissage est constitué d'au moins un matériau polymérique de remplissage. L'élément de remplissage peut être constitué d'un empilage selon la direction radiale d'au moins deux matériaux polymériques de remplissage différents. L'élément de remplissage sépare axialement la partie principale et le retournement.

Au cours du roulage du véhicule, le pneumatique, monté sur sa jante, gonflé et écrasé sous la charge du véhicule, est soumis à des cycles de flexion, en particulier au niveau de ses bourrelets et de ses flancs.

Les cycles de flexion entraînent des variations de courbure combinées avec des variations de tension des éléments de renforcement métalliques de la partie principale et du retournement.

Lors de sa flexion, le bourrelet s'enroule autour du rebord de jante avec lequel il est en contact : il se comporte mécaniquement comme une poutre en flexion dont les fibres respectivement extérieure et intérieure sont la partie principale et le retournement, et dont la longueur est définie par la longueur de retournement. La flexion du bourrelet est conditionnée par la géométrie du rebord de jante, et, en particulier, par la hauteur du rebord de jante définie par les normes usuelles relatives aux pneumatiques, telles que, par exemple, les normes de l'ETRTO. Le retournement, soumis aux cycles de flexion, subit des déformations de compression, susceptibles d'entraîner sa rupture par fatigue, et donc une diminution de l'endurance du bourrelet et de la durée de vie du pneumatique. Cette sensibilité à la mise en compression est d'autant plus forte que le retournement est long, car l'extrémité du retournement est alors radialement positionnée dans des zones de forte flexion du pneumatique.

Le document US2003/0089440-A-1 divulgue un pneumatique selon le préambule de la revendication 1.

Le document EP 2216 189 décrit un bourrelet de pneumatique dont l'endurance est améliorée par une réduction des déformations de compression dans le retournement, lors de la flexion du bourrelet sur la jante, en utilisation. Cet objectif est atteint grâce à un retournement tel que la distance entre le retournement et la partie principale décroît continûment, radialement vers l'extérieur, à partir de la tringle, jusqu'à une distance minimale, puis augmente continûment jusqu'à une distance maximale. Le retournement s'étend radialement à l'extérieur du point du retournement correspondant à la distance maximale entre le retournement et la partie principale.

Les inventeurs se sont donnés pour objectif d'améliorer encore l'endurance des bourrelets d'un pneumatique radial pour véhicule lourd de type génie civil, en diminuant la mise en compression du retournement lors du roulage du pneumatique.

Cet objectif a été atteint, selon l'invention, par un pneumatique pour véhicule lourd de type génie civil comprenant :
- deux bourrelets destinés à entrer en contact avec une jante ayant deux rebords de jante,
- une armature de carcasse comprenant au moins une couche d'armature de carcasse ayant une partie principale s'enroulant dans chaque bourrelet, de l'intérieur vers l'extérieur du pneumatique, autour d'une tringle de section méridienne sensiblement circulaire, pour former un retournement,
- un élément de remplissage prolongeant radialement vers l'extérieur la tringle et séparant axialement la partie principale et le retournement,
- la distance entre une première portion de retournement et la partie principale décroissant continûment, radialement vers l'extérieur, à partir de la tringle, jusqu'à une distance minimale,
- la distance entre une deuxième portion de retournement, prolongeant radialement vers l'extérieur la première portion de retournement, et la partie principale étant sensiblement constante et égale à la distance minimale entre la première portion de retournement et la partie principale.

Selon l'invention, il est avantageux d'avoir la distance entre une deuxième portion de retournement, prolongeant radialement vers l'extérieur la première portion de retournement, et la partie principale sensiblement constante et égale à la distance minimale entre la première portion de retournement et la partie principale.

La première portion de retournement s'étend radialement vers l'extérieur depuis la tringle. La distance entre la première portion de retournement et la partie principale décroît continûment depuis le diamètre de la tringle jusqu'à une valeur minimale.

La deuxième portion de retournement s'étend radialement vers l'extérieur dans le prolongement de la première portion de retournement. La distance entre tout point de la deuxième portion de retournement et la partie principale, mesurée perpendiculairement à la partie principale, est sensiblement constante et égale à la distance minimale atteinte au point le plus radialement extérieur de la première portion de retournement, c'est-à-dire que cette distance peut varier sensiblement entre 0.9 fois et 1.1 fois la distance minimale.

La deuxième portion de retournement correspond sensiblement à la portion de bourrelet s'enroulant sur le rebord de jante, et, plus précisément, sur la portion sensiblement circulaire et radialement extérieure du rebord de jante, lors du roulage du pneumatique. Dans cette portion de bourrelet, se comportant comme une poutre en flexion, la partie principale, assimilable à la fibre extérieure de la poutre, est en extension alors que le retournement, assimilable à la fibre intérieure de la poutre, est en compression. Réduire la distance entre le retournement et la partie principale revient à réduire la distance entre les fibres extérieure et intérieure de la poutre, ce qui permet de diminuer la mise en compression de la fibre intérieure, c'est-à-dire du retournement.

Il est également avantageux d'avoir la distance sensiblement constante entre la deuxième portion de retournement et la partie principale au plus égale au diamètre de la section méridienne sensiblement circulaire de la tringle divisé par 4, de préférence au diamètre de la section méridienne sensiblement circulaire de la tringle divisé par 6.

Le diamètre de la section méridienne sensiblement circulaire de la tringle est le diamètre du cercle circonscrit à la section méridienne de la tringle, constituée usuellement d'un élément de renforcement circonférentiel métallique entouré d'un élément d'enrobage, souvent constitué d'un matériau polymérique.

La distance entre la deuxième portion de retournement et la partie principale doit être suffisamment faible, c'est-à-dire que le couplage entre la deuxième portion de retournement et la partie principale doit être suffisamment élevé, pour avoir une diminution significative de la mise en compression du retournement, c'est-à-dire une compression quasi nulle voire une extension.

Il est encore avantageux que la distance radiale entre le point, le plus radialement intérieur de la deuxième portion de retournement, et la droite axiale, radialement positionnée au diamètre nominal de jante, soit au moins égale à la hauteur radiale du rebord de jante.

Il est également avantageux que la distance radiale entre le point, le plus radialement intérieur de la deuxième portion de retournement, et la droite axiale, radialement positionnée au diamètre nominal de jante, soit au plus égale à 2 fois, de préférence 1.2 fois, la hauteur radiale du rebord de jante.

En effet, une caractéristique importante est le positionnement radial de la deuxième portion de retournement par rapport au rebord de jante. Selon les normes usuelles relatives au pneumatique, telles que les normes de l'ETRTO, la jante est caractérisée en particulier par son diamètre nominal et le rebord de jante est caractérisé par sa hauteur radiale. La hauteur radiale du rebord de jante est mesurée entre la droite axiale, parallèle à l'axe de rotation du pneumatique, passant par le diamètre nominal de la jante ou diamètre au seat et le point le plus radialement extérieur du rebord de jante.

Le positionnement radial de la deuxième portion de retournement par rapport au rebord de jante est conditionné par la distance radiale entre le point, le plus radialement intérieur de la deuxième portion de retournement, et la droite axiale, radialement positionnée au diamètre nominal de jante. Un intervalle de distance radiale compris entre une valeur minimale, égale à la hauteur radiale du rebord de jante, et un valeur maximale, égale à 2 fois, de préférence 1.2 fois, la hauteur radiale du rebord de jante, garantit un positionnement de la deuxième portion de retournement dans la zone de flexion pour laquelle on vise une diminution de la mise en compression du retournement.

La différence entre la distance radiale entre le point, le plus radialement extérieur de la deuxième portion de retournement, et la droite axiale, radialement positionnée au diamètre nominal de jante, et la distance radiale entre le point, le plus radialement intérieur de la deuxième portion de retournement, et la droite axiale, radialement positionnée au diamètre nominal de jante, est avantageusement au plus égale à la hauteur radiale du rebord de jante.

Cette caractéristique définit la valeur maximale de la hauteur radiale de la deuxième portion de retournement, qui permet de limiter la deuxième portion de retournement à la portion de retournement soumise à la mise en compression la plus élevée.

En outre, le point le plus radialement extérieur de la deuxième portion de retournement correspond sensiblement à un point d'inflexion du retournement, c'est-à-dire à une inversion de courbure du retournement, radialement à l'extérieur duquel le retournement est en extension.

La distance entre une troisième portion de retournement, prolongeant radialement vers l'extérieur la deuxième portion de retournement, et la partie principale atteint avantageusement une distance maximale en un point de la troisième portion de retournement.

La troisième portion de retournement prolonge radialement vers l'extérieur la deuxième portion de retournement jusqu'à l'extrémité du retournement, c'est-à-dire le point le plus radialement extérieur du retournement. La troisième portion de retournement est donc radialement extérieure à la zone de flexion sur le rebord de jante.

Il est avantageux que, dans cette troisième portion de retournement, la distance entre le retournement et la partie principale augmente par rapport à la distance minimale entre la deuxième portion de retournement et la partie principale. En effet, ceci confère au retournement une géométrie initiale sinueuse quand on passe de la première à la deuxième puis à la troisième portion de retournement. Lors du gonflage, cette géométrie initiale sinueuse va évoluer vers une géométrie déformée plus rectiligne du retournement, ce qui va contribuer à la mise en tension du retournement. Cette précontrainte en tension du retournement, au gonflage, va ainsi permettre d'éviter le passage en compression du retournement lors de la flexion du bourrelet sur le rebord de jante, en roulage.

Cette augmentation de distance, au niveau de la troisième portion de retournement, permet en outre de diminuer le couplage entre le retournement et la partie principale dans cette portion de retournement. Ceci contribue à diminuer les efforts de cisaillement dans l'élément de remplissage dans cette zone proche de l'extrémité du retournement, zone particulièrement sensible à la fissuration.

Selon un mode de réalisation préféré, la distance maximale entre la troisième portion de retournement et la partie principale est au moins égale à 1.2 fois, de préférence 2 fois, la distance entre la deuxième portion de retournement et la partie principale.

Une augmentation significative de la distance du retournement à la partie principale, quand on passe de la deuxième à la troisième portion de retournement, est effectivement nécessaire, pour avoir une géométrie initiale sinueuse du retournement suffisamment prononcée pour permettre une précontrainte en tension suffisante du retournement évitant le passage en compression du retournement en roulage.

Selon un mode de réalisation particulier, le point de la troisième portion de retournement, en lequel la distance maximale entre la troisième portion de retournement et la partie principale est atteinte, est le point le plus radialement extérieur du retournement.

Dans ce cas particulier, le découplage maximal est réalisé en extrémité de retournement. Cette configuration permet tout particulièrement de réduire le risque de propagation de fissure à partir de l'extrémité du retournement à travers l'élément de remplissage.

Selon un autre mode de réalisation, la couche d'armature de carcasse étant constituée d'éléments de renforcement enrobés par un matériau polymérique d'enrobage, et l'élément de remplissage ayant une portion d'élément de remplissage, axialement comprise entre la deuxième portion de retournement et la partie principale, constituée d'un matériau polymérique de remplissage, il est avantageux que le matériau polymérique de remplissage de la portion d'élément de remplissage, axialement comprise entre la deuxième portion de retournement et la partie principale, soit identique au matériau polymérique d'enrobage de la couche d'armature de carcasse.

Au niveau de la deuxième portion de retournement, l'épaisseur de l'élément de remplissage est réduite, ce qui implique, d'une part une augmentation des efforts de cisaillement dans l'élément de remplissage, d'autre part une diminution de la dissipation thermique du matériau polymérique de remplissage constitutif de l'élément de remplissage. Les inventeurs ont estimé avantageux d'utiliser, dans cette zone de fort couplage entre le retournement et la partie principale, un matériau polymérique de remplissage rigide et dissipatif. Le matériau polymérique d'enrobage des éléments de renforcement de la couche d'armature de carcasse étant usuellement rigide et dissipatif peut, par conséquent, être utilisé pour l'élément de remplissage, au niveau de la deuxième portion de retournement. Par ailleurs, une même nature de matériau polymérique entre la couche d'armature de carcasse et l'élément de remplissage évite les singularités de discontinuité aux interfaces respectivement entre le retournement et l'élément de remplissage, et entre l'élément de remplissage et la partie principale, ce qui réduit les risques de fissuration dans cette zone.

Il est avantageux que la distance radiale entre le point le plus radialement extérieur du retournement et la droite axiale, radialement positionnée au diamètre nominal de jante, soit au moins égale à 0.8 fois la distance radiale entre le point le plus axialement extérieur de la partie principale et la droite axiale, radialement positionnée au diamètre nominal de jante.

En d'autres termes, le positionnement radial de l'extrémité du retournement est proche de celui du point le plus axialement extérieur de la partie principale, ce point, en lequel la tangente à la partie principale est radiale, définissant la largeur du pneumatique au niveau du flanc. Ce positionnement radial est caractéristique d'un retournement long.

Un retournement long contribue à la reprise des efforts de tension au gonflage dans la couche d'armature de carcasse, sous réserve d'une rigidité de torsion de la tringle suffisamment faible.

Selon le positionnement radialement intérieur ou radialement extérieur de l'extrémité de retournement par rapport au point le plus axialement extérieur de l'armature de carcasse, lors de la flexion du flanc en roulage, l'extrémité de retournement peut être soit tirée radialement vers l'extérieur et être mise en tension, soit, au contraire, poussée radialement vers l'intérieur et être mise en compression. Donc le positionnement radial de l'extrémité du retournement conditionne le passage ou non compression du retournement.

Enfin, selon un mode de réalisation avantageux, l'épaisseur minimale de l'élément polymérique d'enrobage de la tringle est au moins égale à 0.04 fois le diamètre de la section méridienne de l'élément de renforcement circonférentiel de la tringle.

Le diamètre de la section méridienne de l'élément de renforcement circonférentiel de la tringle est le diamètre du cercle circonscrit à la section méridienne de l'élément de renforcement circonférentiel de la tringle. L'épaisseur minimale de l'élément polymérique d'enrobage de la tringle est égale à la moitié de la différence entre le diamètre de la section méridienne sensiblement circulaire de la tringle et le diamètre de la section méridienne de l'élément de renforcement circonférentiel de la tringle.

Cette caractéristique d'épaisseur minimale de l'élément polymérique d'enrobage de la tringle traduit l'assouplissement de la tringle en torsion ou diminution de la rigidité de torsion de la tringle, par rapport à une tringle de l'état de la technique très rigide en torsion. L'élément de renforcement circonférentiel d'une tringle de l'état de la technique est, par exemple, constitué par un enroulement circonférentiel, de couches de fils métalliques unitaires enrobés d'un matériau polymérique. L'introduction d'un élément polymérique d'enrobage autour de l'élément de renforcement circonférentiel permet un découplage entre l'élément de renforcement circonférentiel de la tringle et la couche d'armature de carcasse, dans la zone d'interface entre une portion radialement intérieure de l'élément de renforcement circonférentiel et la couche d'armature de carcasse.

Lors du gonflage, sous l'effet de la mise en tension de l'armature de carcasse, la tringle, autour de laquelle s'enroule la couche d'armature de carcasse pour former un retournement, se comporte comme une poulie soumise à un couple de torsion sous l'action de la partie principale et du retournement assimilables aux brins d'un fil passant sur la poulie. Si la poulie est suffisamment souple, c'est-à-dire si sa rigidité de torsion est suffisamment faible, la rotation de la tringle au gonflage va contribuer à la mise en tension du retournement.

Dans le cas présent, l'assouplissement de la tringle est réalisé par une augmentation de l'épaisseur de l'élément polymérique d'enrobage de la tringle par rapport à une tringle de l'état de la technique.

Il est également envisageable de choisir, pour une épaisseur d'élément polymérique d'enrobage donnée, un matériau polymérique d'enrobage moins rigide, caractérisé par un module d'élasticité à 10% d'allongement moins élevé.

Il est enfin envisageable de choisir une tringle dont l'élément de renforcement circonférentiel est souple par conception, telle que, par exemple, une tringle dite tressée, constituée d'un assemblage de câbles métalliques.

Les caractéristiques de l'invention seront mieux comprises à l'aide de la description de la figure annexée 1, qui présente une vue en coupe, dans un plan méridien, du bourrelet d'un pneumatique pour véhicule lourd de type génie civil, selon l'invention.

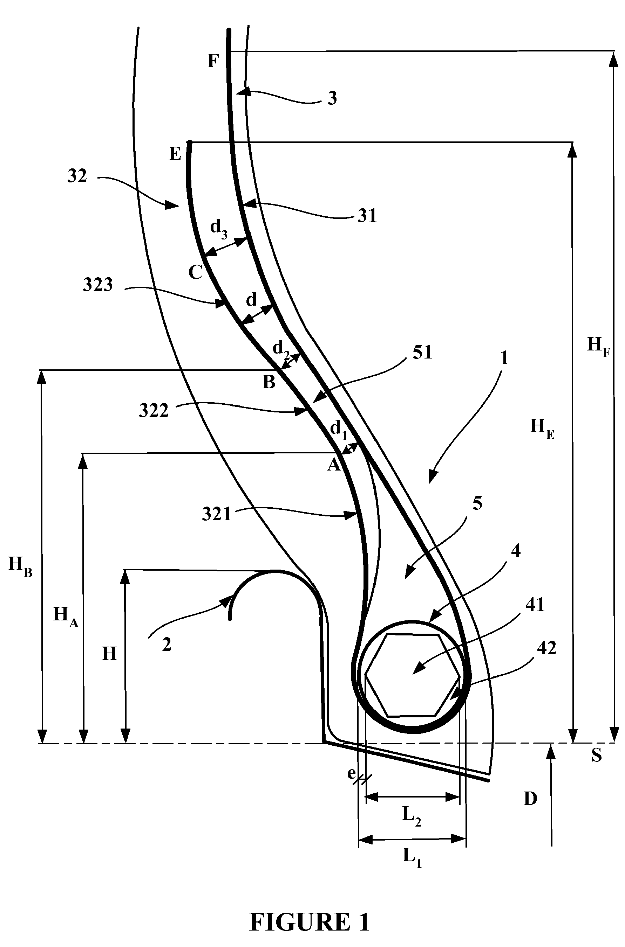

La figure 1 n'est pas représentée à l'échelle pour en faciliter la compréhension.

Sur la figure 1, est représenté un bourrelet 1 de pneumatique pour véhicule lourd de type génie civil selon l'invention, en contact avec un rebord de jante 2 comprenant une portion circulaire autour de laquelle le bourrelet s'enroule lors de sa flexion en roulage.

Le rebord de jante a une hauteur radiale H, mesurée entre le point le plus radialement extérieur de la portion circulaire du rebord de jante et la droite S passant par le diamètre nominal D de la jante ou diamètre au seat, tel que défini, par exemple, par les normes de l'ETRTO.

Le bourrelet 1 comprend une armature de carcasse ayant une seule couche d'armature de carcasse 3 constituée d'éléments de renforcement métalliques. La couche d'armature de carcasse comprend une partie principale 31 s'enroulant, de l'intérieur vers l'extérieur du pneumatique, autour d'une tringle 4 pour former un retournement 32. Le retournement 32 et la partie principale 31 sont axialement séparés par un élément de remplissage 5 s'étendant radialement à l'extérieur de la tringle 4. Dans la configuration présentée sur la figure 1, l'élément de remplissage 5 est constitué d'un empilement radial de deux matériaux polymériques de remplissage.

Le retournement 32 est constitué de trois portions de retournement 321, 322 et 323, s'étendant radialement depuis le dernier point de contact (non représenté) avec la tringle 4 jusqu'au point E d'extrémité de retournement 32. Le point E d'extrémité de retournement 32 est radialement positionné à la distance radiale H_{E}, par rapport à la droite S passant par le diamètre nominal D de la jante. La distance radiale H_{E} est préférentiellement au moins égale à 0.80 fois la distance radiale H_{F} du point F, le plus axialement extérieur de la couche d'armature de carcasse 3, par rapport à la droite S passant par le diamètre nominal D de la jante : ceci caractérise un retournement 32 long.

La première portion de retournement 321 s'étend depuis le dernier point de contact avec la tringle (non représenté) jusqu'au point A. La distance entre la première portion de retournement 321 et la partie principale 31 décroît continûment depuis la largeur L₁ de la tringle jusqu'à la distance d₁, qui est la distance minimale entre le retournement 32 et la partie principale 31.

La deuxième portion de retournement 322 prolonge radialement vers l'extérieur la première portion de retournement 321 : elle est limitée radialement à l'intérieur par le point A et radialement à l'extérieur par le point B, respectivement radialement positionnés aux distances radiales H_{A} et H_{B}, par rapport à la droite S passant par le diamètre nominal D de la jante. La distance d₂ entre la deuxième portion de retournement 322 et la partie principale 31 est sensiblement constante et égale à la distance minimale d₁ de la première portion de retournement à + ou - 10% près. L'élément de remplissage 5 a une portion d'élément de remplissage 51, constituée préférentiellement par un matériau polymérique de remplissage identique au matériau polymérique d'enrobage des éléments de renforcement métalliques de la couche d'armature de carcasse 3.

Enfin, la troisième portion de retournement 323 prolonge radialement vers l'extérieur la deuxième portion de retournement 322 : elle est limitée radialement à l'intérieur par le point B et radialement à l'extérieur par le point E. La distance d entre la troisième portion de retournement 323 et la partie principale 31 comprend une valeur maximale d₃ en un point C.

La tringle 4 est constituée par un élément de renforcement circonférentiel 41 dont la section méridienne, hexagonale dans le cas représenté, est inscrite dans un cercle de diamètre L₂, qui définit la largeur axiale de l'élément de renforcement circonférentiel 41, et d'un élément d'enrobage 42, constitué le plus souvent d'un matériau polymérique, dont la section méridienne sensiblement circulaire a un diamètre L₁, qui définit la largeur axiale de la tringle 4, élément d'enrobage 42 compris. L'épaisseur minimale e de l'élément polymérique d'enrobage 42 de la tringle 4 est définie comme étant la moitié de la différence entre la largeur axiale L₁ de la tringle 4 et la largeur axiale L₂ de son élément de renforcement circonférentiel 41. L'épaisseur de l'élément d'enrobage 42 de la tringle 4 est variable, comme le montre la figure 1: c'est l'épaisseur minimale e qui permet de régler la rigidité de torsion de la tringle 4. Pour un matériau polymérique d'enrobage donné, plus l'épaisseur minimale e est forte, plus la rigidité de torsion diminue : ce qui autorise une rotation plus importante de la tringle 4, et, par conséquent, une mise en tension du retournement 32 lors du gonflage du pneumatique.

L'invention a été en particulier étudiée dans le cas d'un pneumatique pour véhicule lourd de dimension 40.00R57, monté sur une jante dont la hauteur radiale H du rebord de jante 2, mesurée par rapport à la droite S passant par le diamètre nominale D de la jante, est égale à 152 mm.

La première portion de retournement 321 s'étend depuis le dernier point de contact avec la tringle jusqu'au point A. La distance entre la première portion de retournement 321 et la partie principale 31 décroît continûment depuis la largeur L₁ de la tringle jusqu'à la distance d₁ égale à 10 mm, qui est la distance minimale entre le retournement 32 et la partie principale 31.

La deuxième portion de retournement 322 prolonge radialement vers l'extérieur la première portion de retournement 321: elle est limitée radialement à l'intérieur par le point A et radialement à l'extérieur par le point B, respectivement radialement positionnés aux distances radiales H_{A} égale à 211 mm et H_{B} égale à 311 mm, par rapport à la droite S passant par le diamètre nominal D de la jante. La distance radiale H_{A} est égale à 1.4 fois la hauteur radiale H du rebord de jante 2, donc comprise entre 1 fois et 2 fois la hauteur radiale H. La différence entre la distance radiale H_{B} et la distance radiale H_{A} est égale 100 mm, donc inférieure à la hauteur radiale H du rebord de jante 2. La distance d₂ entre la deuxième portion de retournement 322 et la partie principale 31 est sensiblement constante et égale à la distance minimale d₁, égale à 10 mm, de la première portion de retournement 321.

La troisième portion de retournement 323 prolonge radialement vers l'extérieur la deuxième portion de retournement 322 : elle est limitée radialement à l'intérieur par le point B et radialement à l'extérieur par le point E. La distance d entre la troisième portion de retournement 323 et la partie principale 31 comprend une valeur maximale d₃ au point C égale à 16 mm. La distance radiale H_{E} du point E d'extrémité du retournement 32 est égale à 465 mm. La distance entre la troisième portion de retournement 323 et la partie principale 31, au niveau du point E d'extrémité du retournement 32, est égale à 14 mm.

Des simulations de calculs par éléments finis, réalisées sur un pneumatique selon l'invention, tel que représenté sur la figure 1, ont montré que la mise en compression du retournement est sensiblement réduite lors du roulage du pneumatique.

## Revendications

1. Pneumatique pour véhicule lourd de type génie civil comprenant deux bourrelets (1) destinés à entrer en contact avec une jante ayant deux rebords de jante (2), une armature de carcasse comprenant au moins une couche d'armature de carcasse (3) ayant une partie principale (31) s'enroulant dans chaque bourrelet (1), de l'intérieur vers l'extérieur du pneumatique, autour d'une tringle (4) de section méridienne sensiblement circulaire, pour former un retournement (32), la tringle (4) étant constituée d'un élément de renforcement circonférentiel (41) entourée par un élément polymérique d'enrobage (42), un élément de remplissage (5) prolongeant radialement vers l'extérieur la tringle (4) et séparant axialement la partie principale (31) et le retournement (32), la distance (d) entre une première portion de retournement (321) et la partie principale (31) décroissant continûment, radialement vers l'extérieur, à partir de la tringle (4), jusqu'à une distance minimale (d₁), où la distance (d₂) entre une deuxième portion de retournement (322), prolongeant radialement vers l'extérieur la première portion de retournement (321), et la partie principale (31) est sensiblement constante et égale à la distance minimale (d₁) entre la première portion de retournement (321) et la partie principale (31), charactérisé **en ce que** l'épaisseur minimale (e) de l'élément polymérique d'enrobage (42) de la tringle (4) est au moins égale à 0.04 fois le diamètre (L₂) de la section méridienne de l'élément de renforcement circonférentiel (41) de la tringle (4).

2. Pneumatique pour véhicule lourd de type génie civil selon la revendication 1, **caractérisé en ce que** la distance (d₂) sensiblement constante entre la deuxième portion de retournement (322) et la partie principale (31) est au plus égale au diamètre (L₁) de la section méridienne sensiblement circulaire de la tringle (4) divisé par 4, de préférence au diamètre (L₁) de la section méridienne sensiblement circulaire de la tringle (4) divisé par 6.

3. Pneumatique pour véhicule lourd de type génie civil selon l'une quelconque des revendications 1 ou 2, **caractérisé en ce que** la distance (d) entre une troisième portion de retournement (323), prolongeant radialement vers l'extérieur la deuxième portion de retournement (322), et la partie principale (31) atteint une distance maximale (d₃) en un point C de la troisième portion de retournement (323).

4. Pneumatique pour véhicule lourd de type génie civil selon la revendication 3, **caractérisé en ce que** la distance maximale (d₃) entre la troisième portion de retournement (323) et la partie principale (31) est au moins égale à 1.2 fois, de préférence 2 fois, la distance (d₂) entre la deuxième portion de retournement (322) et la partie principale (31).

5. Pneumatique pour véhicule lourd de type génie civil l'une quelconque des revendications 3 ou 4, **caractérisé en ce que** le point C de la troisième portion de retournement (323), en lequel la distance maximale (d₃) entre la troisième portion de retournement (323) et la partie principale (31) est atteinte, est le point E le plus radialement extérieur du retournement (32).

6. Pneumatique pour véhicule lourd de type génie civil l'une quelconque des revendications 1 à 5, la couche d'armature de carcasse (3) étant constituée d'éléments de renforcement enrobés par un matériau polymérique d'enrobage, et l'élément de remplissage (5) ayant une portion d'élément de remplissage (51), axialement comprise entre la deuxième portion de retournement (322) et la partie principale (31), constituée d'un matériau polymérique de remplissage, **caractérisé en ce que** le matériau polymérique de remplissage de la portion d'élément de remplissage (51), axialement comprise entre la deuxième portion de retournement (322) et la partie principale (31), est identique au matériau polymérique d'enrobage de la couche d'armature de carcasse (3).

7. Ensemble monté comprenant un pneumatique pour véhicule lourd de type génie civil, selon l'une quelconque des revendications 1 à 6, et une jante (2), **caractérisé en ce que** la distance radiale (H_{A}) entre le point A, le plus radialement intérieur de la deuxième portion de retournement (322), et la droite axiale (S), radialement positionnée au diamètre nominal (D) de jante (2), est au moins égale à la hauteur radiale (H) du rebord de jante (2).

8. Ensemble monté, comprenant un pneumatique pour véhicule lourd de type génie civil et une jante (2), selon la revendication 7, **caractérisé en ce que** la distance radiale (H_{A}) entre le point A, le plus radialement intérieur de la deuxième portion de retournement (322), et la droite axiale (S), radialement positionnée au diamètre nominal (D) de jante (2), est au plus égale à 2 fois, de préférence 1.2 fois, la hauteur radiale (H) du rebord de jante (2).

9. Ensemble monté comprenant un pneumatique pour véhicule lourd de type génie civil et une jante (2), selon l'une des revendications 7 ou 8, **caractérisé en ce que** la différence entre la distance radiale (H_{B}) entre le point B, le plus radialement extérieur de la deuxième portion de retournement (322), et la droite axiale (S), radialement positionnée au diamètre nominal (D) de jante (2), et la distance radiale (H_{A}) entre le point A, le plus radialement intérieur de la deuxième portion de retournement (322), et la droite axiale (S), radialement positionnée au diamètre nominal (D) de jante (2), est au plus égale à la hauteur radiale (H) du rebord de jante (2).

10. Ensemble monté comprenant un pneumatique pour véhicule lourd de type génie civil et une jante (2), selon l'une quelconque des revendications 7 à 9, **caractérisé en ce que** la distance radiale (H_{E}) entre le point E, le plus radialement extérieur du retournement (32), et la droite axiale (S), radialement positionnée au diamètre nominal (D) de jante (2), est au moins égale à 0.8 fois la distance radiale (H_{F}) entre le point F, le plus axialement extérieur de la partie principale (321), et la droite axiale (S), radialement positionnée au diamètre nominal (D) de jante (2).

## Patentansprüche

1. Reifen für Schwerlastbaufahrzeug, umfassend zwei Wulste (1), die dazu bestimmt sind, mit einer Felge, die zwei Felgenkanten (2) besitzt, in Kontakt zu treten, eine Karkassenbewehrung, umfassend mindestens eine Karkassenbewehrungsschicht (3), die einen Hauptteil (31) besitzt, der sich in jedem Wulst (1), von der Innenseite zur Außenseite des Reifens, um einen Kern (4) mit im Wesentlichem kreisförmigem Meridianschnitt wickelt, um einen Umschlag (32) zu bilden, wobei der Kern (4) aus einem Umfangsverstärkungselement (41), das von einem polymerischen Umhüllungselement (42) umgeben ist, besteht, wobei ein Füllelement (5) den Kern (4) radial nach außen hin verlängert und den Hauptteil (31) und den Umschlag (32) axial voneinander trennt, wobei der Abstand (d) zwischen einem ersten Umschlagabschnitt (321) und dem Hauptteil (31) ausgehend vom Kern (4), radial nach außen hin, bis zu einem minimalen Abstand (d₁) kontinuierlich sinkt, wobei der Abstand (d₂) zwischen einem zweiten Umschlagabschnitt (322), der den ersten Umschlagabschnitt (321) radial nach außen hin verlängert, und dem Hauptteil (31) weitestgehend konstant und gleich dem minimalen Abstand (d₁) zwischen dem ersten Umschlagabschnitt (321) und dem Hauptteil (31) ist, **dadurch gekennzeichnet, dass** die minimale Dicke (e) des polymerischen Umhüllungselements (42) des Kerns (4) mindestens gleich 0,04 Mal dem Durchmesser (L₂) des Meridianschnitts des Umfangsverstärkungselements (41) des Kerns (4) ist.

2. Reifen für Schwerlastbaufahrzeug nach Anspruch 1, **dadurch gekennzeichnet, dass** der zwischen dem zweiten Umschlagabschnitt (322) und dem Hauptteil (31) im Wesentlichen konstante Abstand (d₂) höchstens gleich dem Durchmesser (L₁) des weitestgehend kreisförmigen Meridianschnitts des Kerns (4), dividiert durch 4, vorzugsweise gleich dem Durchmesser (L₁) des im Wesentlichen kreisförmigen Meridianschnitts des Kerns (4), dividiert durch 6, ist.

3. Reifen für Schwerlastbaufahrzeug nach einem der Ansprüche 1 oder 2, **dadurch gekennzeichnet, dass** der Abstand (d) zwischen einem dritten Umschlagabschnitt (323), der den zweiten Umschlagabschnitt (322) radial nach außen hin verlängert, und dem Hauptteil (31) an einem Punkt C des dritten Umschlagabschnitts (323) einen maximalen Abstand (d₃) erreicht.

4. Reifen für Schwerlastbaufahrzeug nach Anspruch 3, **dadurch gekennzeichnet, dass** der maximale Abstand (d₃) zwischen dem dritten Umschlagabschnitt (323) und dem Hauptteil (31) mindestens gleich 1,2 Mal, vorzugsweise 2 Mal, dem Abstand (d₂) zwischen dem zweiten Umschlagabschnitt (322) und dem Hauptteil (31) ist.

5. Reifen für Schwerlastbaufahrzeug nach einem der Ansprüche 3 oder 4, **dadurch gekennzeichnet, dass** der Punkt C des dritten Umschlagabschnitts (323), an dem der maximale Abstand (d₃) zwischen dem dritten Umschlagabschnitt (323) und dem Hauptteil (31) erreicht wird, der radial am weitesten außen befindliche Punkt E des Umschlags (32) ist.

6. Reifen für Schwerlastbaufahrzeug nach einem der Ansprüche 1 bis 5, wobei die Karkassenbewehrungsschicht (3) aus Verstärkungselementen, die mit einem polymerischen Umhüllungsmaterial umhüllt sind, besteht, und das Füllelement (5) einen Füllelementabschnitt (51), der axial zwischen dem zweiten Umschlagabschnitt (322) und dem Hauptteil (31) enthalten ist, bestehend aus einem polymerischen Füllmaterial, besitzt, **dadurch gekennzeichnet, dass** das polymerische Füllmaterial des Füllelementabschnitts (51), der axial zwischen dem zweiten Umschlagabschnitt (322) und dem Hauptteil (31) enthalten ist, mit dem polymerischen Umhüllungsmaterial der Karkassenbewehrungsschicht (3) identisch ist.

7. Montierte Baugruppe, umfassend einen Reifen für Schwerlastbaufahrzeug, nach einem der Ansprüche 1 bis 6, und eine Felge (2), **dadurch gekennzeichnet, dass** der radiale Abstand (H_{A}) zwischen dem Punkt A, dem radial am weitesten innen befindlichen Punkt des zweiten Umschlagabschnitts (322), und der axialen Geraden (S), radial am Nenndurchmesser (D) der Felge (2) positioniert, mindestens gleich der radialen Höhe (H) der Kante der Felge (2) ist.

8. Montierte Baugruppe, umfassend einen Reifen für Schwerlastbaufahrzeug und eine Felge (2), nach Anspruch 7, **dadurch gekennzeichnet, dass** der radiale Abstand (H_{A}) zwischen dem Punkt A, dem radial am weitesten innen befindlichen Punkt des zweiten Umschlagabschnitts (322), und der axialen Geraden (S), radial am Nenndurchmesser (D) der Felge (2) positioniert, höchstens gleich 2 Mal, vorzugsweise 1,2 Mal, der radialen Höhe (H) der Kante der Felge (2) ist.

9. Montierte Baugruppe, umfassend einen Reifen für Schwerlastbaufahrzeug und eine Felge (2), nach einem der Ansprüche 7 oder 8, **dadurch gekennzeichnet, dass** der Unterschied zwischen dem radialen Abstand (H_{B}) zwischen dem Punkt B, dem radial am weitesten außen befindlichen Punkt des zweiten Umschlagabschnitts (322), und der axialen Geraden (S), radial am Nenndurchmesser (D) der Felge (2) positioniert, und dem radialen Abstand (H_{A}) zwischen dem Punkt A, dem radial am weitesten innen befindlichen Punkt des zweiten Umschlagabschnitts (322), und der axialen Geraden (S), radial am Nenndurchmesser (D) der Felge (2) positioniert, höchstens gleich der radialen Höhe (H) der Kante der Felge (2) ist.

10. Montierte Baugruppe, umfassend einen Reifen für Schwerlastbaufahrzeug und eine Felge (2), nach einem der Ansprüche 7 bis 9, **dadurch gekennzeichnet, dass** der radiale Abstand (H_{E}) zwischen dem Punkt E, dem radial am weitesten außen befindlichen Punkt des Umschlags (32), und der axialen Geraden (S), radial am Nenndurchmesser (D) der Felge (2) positioniert, mindestens gleich 0,8 Mal des radialen Abstands (H_{F}) zwischen dem Punkt F, dem radial am weitesten außen befindlichen Punkt des Hauptteils (321), und der axialen Geraden (S), radial am Nenndurchmesser (D) der Felge (2) positioniert, ist.

## Claims

1. Tyre for a heavy vehicle of the construction plant type, comprising two beads (1) intended to come into contact with a rim having two rim flanges (2), a carcass reinforcement comprising at least one carcass reinforcing layer (3) having a main part (31) wrapped, within each bead (1), from the inside towards the outside of the tyre, around a bead wire (4) of substantially circular meridian cross section to form a turnup (32), the bead wire (4) being made up of a circumferential reinforcing element (41) surrounded by a polymeric coating element (42), a filler element (5) extending the bead wire (4) radially towards the outside and axially separating the main part (31) and the turnup (32), the distance (d) between a first portion of turnup (321) and the main part (31) decreasing continuously, radially towards the outside, from the bead wire (4) as far as the minimum distance (d₁), in which the distance (d₂) between a second portion of turnup (322), extending the first portion of turnup (321) radially towards the outside, and the main part (31) is substantially constant and equal to the minimum distance (d1) between the first portion of turnup (321) and the main part (31), **characterized in that** the minimum thickness (e) of the polymer coating element (42) coating the bead wire (4) is at least equal to 0.04 times the diameter (L₂) of the meridian section of the circumferential reinforcing element (41) of the bead wire (4).

2. Tyre for a heavy vehicle of the construction plant type according to Claim 1, **characterized in that** the substantially constant distance (d₂) between the second portion of turnup (322) and the main part (31) is at most equal to the diameter (L₁) of the substantially circular meridian cross section of the bead wire (4) divided by 4, preferably to the diameter (L₁) of the substantially circular meridian cross section of the bead wire (4) divided by 6.

3. Tyre for a heavy vehicle of the construction plant type according to either one of Claims 1 and 2, **characterized in that** the distance (d) between a third portion of turnup (323), extending the second portion of turnup (322) radially towards the outside, and the main part (31) reaches a maximum distance (d₃) at a point C of the third portion of turnup (323).

4. Tyre for a heavy vehicle of the construction plant type according to Claim 3, **characterized in that** the maximum distance (d₃) between the third portion of turnup (323) and the main part (31) is at least equal to 1.2 times, preferably 2 times, the distance (d₂) between the second portion of turnup (322) and the main part (31).

5. Tyre for a heavy vehicle of the construction plant type according to either one of Claims 3 and 4, **characterized in that** the point C of the third portion of turnup (323) at which the maximum distance (d₃) between the third portion of turnup (323) and the main part (31) is reached is the radially outermost point E of the turnup (32).

6. Tyre for a heavy vehicle of the construction plant type according to any one of Claims 1 to 5, the layer of carcass reinforcement (3) being made up of reinforcing elements coated in a coating polymer material, and the filler element (5) having a filler element portion (51), comprised axially between the second portion of turnup (322) and the main part (31), made up of a filler polymer material, **characterized in that** the filler polymer material of the filler element portion (51) comprised axially between the second portion of turnup (322) and the main part (31) is identical to the coating polymer material of the layer of carcass reinforcement (3).

7. Mounted assembly comprising a tyre for a heavy vehicle of the construction plant type according to any one of Claims 1 to 6 and a rim (2), **characterized in that** the radial distance (H_{A}) between the radially innermost point A of the second portion of turnup (322) and the axial straight line (S) positioned radially at the nominal diameter (D) of the rim (2) is at least equal to the radial height (H) of the rim flange (2).

8. Mounted assembly comprising a tyre for a heavy vehicle of the construction plant type and a rim (2), according to Claim 7, **characterized in that** the radial distance (H_{A}) between the radially innermost point A of the second portion of turnup (322) and the axial straight line (S) positioned radially at the nominal diameter (D) of the rim (2) is at most equal to 2 times, preferably 1.2 times, the radial height (H) of the rim flange (2).

9. Mounted assembly comprising a tyre for a heavy vehicle of the construction plant type and a rim (2), according to either of Claims 7 and 8, **characterized in that** the difference between the radial distance (H_{B}) between the radially outermost point B of the second portion of turnup (322) and the axial straight line (S) radially positioned at the nominal diameter (D) of the rim (2), and the radial distance (H_{A}) between the radially innermost point A of the second portion of turnup (322) and the axial straight line (S) radially positioned at the nominal diameter (D) of the rim (2) is at most equal to the radial height (H) of the rim flange (2).

10. Mounted assembly comprising a tyre for a heavy vehicle of the construction plant type and a rim (2), according to any one of Claims 7 to 9, **characterized in that** the radial distance (H_{E}) between the radially outermost point E of the turnup (32) and the axial straight line (S) radially positioned at the nominal diameter (D) of the rim (2) is at least equal to 0.8 times the radial distance (H_{F}) between the axially outermost point F of the main part (321) and the axial straight line (S) radially positioned at the nominal diameter (D) of the rim (2).
